# EUROPEAN PATENT APPLICATION

(11) **EP 3 144 497 A1**
(43) Date of publication of application: **22.03.2017**
(21) Application number: 15793592.5
(22) Date of filing: 08.05.2015
(51) Int. Cl.: F02B 39/00, F02B 33/40, F16C 35/067

(54) **ELECTRIC SUPERCHARGER**

(30) Priority: 14.05.2014 JP 2014100583
(71) Applicant: Kabushiki Kaisha Toyota Jidoshokki, Kariya-shi, Aichi 448-8671 (JP)
(72) Inventor: OSHITA, Makio, Kariya-shi Aichi 448-8671 (JP); YAMAMICHI, Toshihiro, Kariya-shi Aichi 448-8671 (JP)
(74) Representative: TBK
(86) International application number: PCT/JP2015/063326
(87) International publication number: WO 2015/174344

(57) **Abstract**

An electric supercharger wherein the assemblability of a bearing holding structure is improved is provided. An electric motor 30 of an electric supercharger 101 has a shaft 22. A second bearing 24 supports the shaft 22 rotatably. The second bearing 24 comprises an outer ring 24a and an inner ring 24b rotatable with respect to each other. A second bearing sleeve 26 supports the outer ring 24a as a fixed ring. A key ring 51 positions the outer ring 24a with respect to the second bearing sleeve 26. A preloading spring 52 energizes the key ring 51 toward the outer ring 24a or the second bearing sleeve 26.

## Description

### Technical Field

The present invention relates to an electric supercharger.

### Background Art

Among superchargers, there are electric superchargers wherein an impeller (also referred to as a compressor wheel) is driven to rotate by a rotating electric machine such as an electric motor. Bearings such as rolling bearings are used in order to support a rotating shaft of the rotating electric machine. If creeping of an outer ring in the bearing (i.e. co-rotation with an inner ring) is problematic, a construction for preventing the creeping of the outer ring may be provided. Patent Document 1 describes an example of such a construction.

### Conventional Art Documents

### [Patent Document]

[Patent Document 1] Japanese Utility Model Application Laid Open No. 6-44368

### Summary of the Invention

### Problems to be Solved by the Invention

However, conventional constructions have a problem in that assemblability is low.

For example, in the construction of Patent Document 1, a preloading spring combines both a function for preventing the creeping of the outer ring and a function for preloading the outer ring, which makes assembly work difficult.

The present invention is made in order to solve this problem and is aimed at providing an electric supercharger wherein the assemblability of a bearing holding structure is improved.

### Means for Solving the Problems

In order to solve the above problem, an electric supercharger related to the present invention comprises:
- a rotating electric machine having a rotating shaft;
- a bearing for supporting the rotating shaft rotatably, said bearing comprising an outer ring and an inner ring rotatable with respect to each other;
- a fixed ring support member for supporting the outer ring or the inner ring as a fixed ring;
- a positioning member for positioning the fixed ring with respect to the fixed ring support member; and
- an energizing member for energizing the positioning member toward the fixed ring or the fixed ring support member.

This electric supercharger has a construction wherein the positioning member and the energizing member are provided separately.

### Effect of the Invention

According to the electric supercharger related to the present invention, the assemblability of a bearing holding structure is improved because the positioning member and the energizing member are provided separately.

### Brief Description of the Drawings

Fig. 1 is a cross-sectional side view showing a construction of an electric supercharger related to a first embodiment of the present invention.
Fig. 2 is a cross-sectional view showing a positional relationship among the end plate, the second bearing sleeve, the second bearing and the key ring of Fig. 1.
Fig. 3 is a perspective view of the second bearing sleeve of Fig. 1.
Fig. 4 is a perspective view of the second bearing of Fig. 1.
Fig. 5 is a perspective view of the key ring of Fig. 1.
Fig. 6 is a diagram showing an exemplary construction of the key member related to a second embodiment.

### Embodiments of the Invention

Embodiments of the present invention will be explained below on the basis of the attached drawings.

### First Embodiment

First, a construction of the electric supercharger 101 related to the first embodiment of the present invention will be explained below.

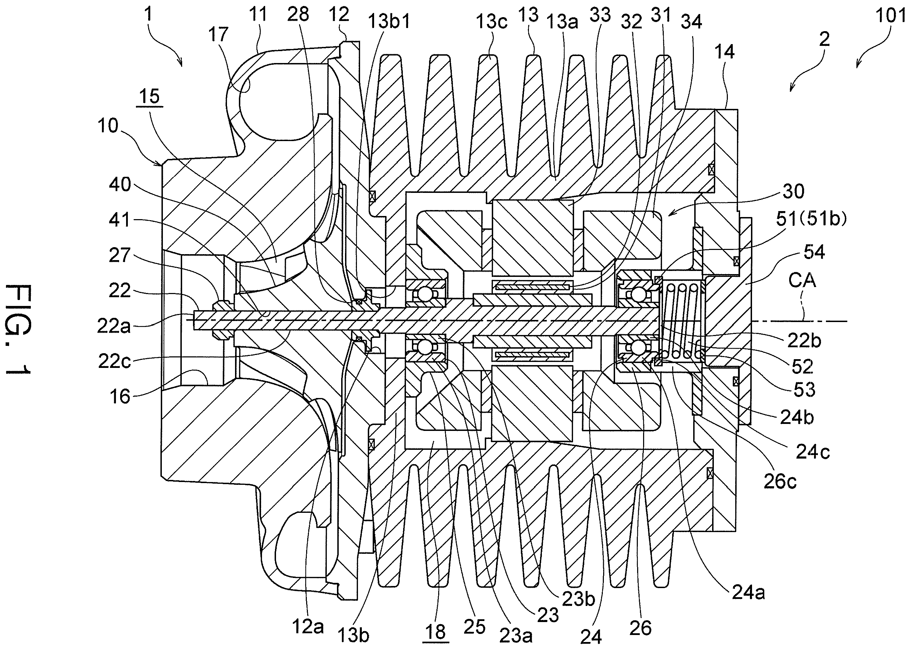

Referring to Fig. 1, the electric supercharger 101 is constituted by a supercharging portion 1 for supercharging intake gas (air in the present embodiment) and a driving portion 2 for driving the supercharging portion 1 by using an electric motor 30 which is a rotating electric machine.

The supercharging portion 1 comprises an impeller 40 for supercharging intake air by rotation, a shaft 22 integrally rotatable with the impeller 40, a compressor cover 11 and a seal plate 12. The compressor cover 11 and the seal plate 12 are for example made of a metal and assembled together to accommodate the impeller 40 inside. Here, the shaft 22 constitutes a rotating shaft.

In the present specification and the present drawings, terms representing axial directions are defined as follows for facilitating explanation: in the shaft 22, the side of an end 22a is referred to as "first side", "front" or "forward" whereas the side of an end 22b is referred to as "second side", "rear" or "backward". Note that these directions are not limited to front-back directions but may be any directions such as up-down, left-right, diagonal, etc.

The shaft 22 extends from inside the compressor cover 11 to the driving portion 2 through the seal plate 12. In this state, the seal plate 12 extends in a radial direction of the shaft 22.

In an interior surrounded by the compressor cover 11 and the seal plate 12, an impeller chamber 15, an intake path 16 and an annular discharging path 17 are formed. The impeller chamber 15 accommodates the impeller 40 to be rotatable. The intake path 16 extends from the impeller chamber 15 in an axial direction of the shaft 22 and opens externally. The discharging path 17 is connected to the impeller chamber 15, extends to surround a periphery of the impeller 40 and opens externally.

The driving portion 2 comprises a motor case 13 and an end plate 14. The motor case 13 is made of a metal in a cylindrical shape having a bottom. The end plate 14 closes an opening of the motor case 13. The motor case 13 and the end plate 14 form a motor chamber 18 accommodating the electrical motor 30 inside. Here, the motor chamber 18 constitutes a rotating electric machine chamber.

On the periphery of a cylindrical side wall 13a of the motor case 13, a plurality of radiation fins 13c are formed integrally therewith and protruding therefrom in order to enhance cooling efficiency of the motor case 13 by circumambient air.

Also, the compressor cover 11, the seal plate 12, the motor case 13 and the end plate 14 form a housing 10 of the electric supercharger 101.

The seal plate 12 is fixed to a bottom wall 13b which is a bottom portion of the motor case 13. Also, at the center of the bottom wall 13b, a bottom wall through hole 13b1 is formed therethrough which opens within the motor chamber 18 and opens toward the seal plate 12. The bottom wall through hole 13b1 has an inner diameter greater than an outer diameter of the shaft 22 so that the shaft 22 passes therethrough. Also, the bottom wall 13b extends in a radial direction of the shaft 22. Here, the bottom wall 13b constitutes a partition wall separating the motor chamber 18 and the impeller chamber 15 and the bottom wall through hole 13b1 constitutes a rotating shaft passing hole for the shaft 22.

Further, a plate through hole 12a is formed through the seal plate 12. The plate through hole 12a is adjacent to the bottom wall through hole 13b1 and connected thereto. Also, the shaft 22 extends through the plate through hole 12a and the bottom wall through hole 13b1 into the motor chamber 18. In this state, the axial directions of the shaft 22 are along the direction that the cylindrical side wall 13a of the motor case 13 extends.

First bearing 23 comprises an outer ring 23a and an inner ring 23b which are rotatable with respect to each other. Similarly, second bearing 24 also comprises an outer ring 24a and an inner ring 24b which are rotatable with respect to each other. The first bearing 23 and the second bearing 24 are for example ball bearings. An angular bearing, for example, may be used as a ball bearing.

The first bearing 23 is located adjacent to the bottom wall through hole 13b1. The first bearing 23 is supported and fixed by a first bearing sleeve 25. The first bearing sleeve 25 has a flanged cylindrical shape surrounding a periphery of the first bearing 23. The first bearing sleeve 25 is fixed to the bottom wall 13b. An inner diameter of the bottom wall through hole 13b1 is less than an outer diameter of the first bearing 23. The first bearing 23 closes the gap between the bottom wall 13b and the shaft 22 by being located at the bottom wall through hole 13b1 in the opening end at the side of the motor chamber 18.

In the present embodiment, in the first bearing 23, the outer ring 23a is fixed with respect to the housing 10 and the first bearing sleeve 25 and the inner ring 23b rotates together with the shaft 22. In other words, it can be said that the outer ring 23a is a fixed ring and the first bearing sleeve 25 supports the outer ring 23a as the fixed ring.

The second bearing 24 is supported and fixed by the second bearing sleeve 26. In the second bearing 24, the outer ring 24a is fixed with respect to the housing 10 and the second bearing sleeve 26 and the inner ring 24b rotates together with the shaft 22. In other words, it can be said that the outer ring 24a is a fixed ring and the second bearing sleeve 26 supports the outer ring 24a as the fixed ring. Note that, with respect to the second bearing 24, the shaft 22 extends forward and the key ring 51 is attached on the rear side.

The first bearing 23, the second bearing 24, the first bearing sleeve 25 and the second bearing sleeve 26 are for example formed by using materials having an equivalent coefficient of thermal expansion (at least, the outer ring 24a of the second bearing 24 and the second bearing sleeve 26 are formed by using materials having an equivalent coefficient of thermal expansion). Here, those skilled in the art would understand the meaning of "an equivalent coefficient of thermal expansion", but this may mean for example that differences among the coefficients of thermal expansion are so small that they are negligible within the range of rated temperature conditions for the electrical supercharger 101.

The shaft 22 passes, in the front side thereof, inside a through hole 41 at the center of the impeller 40. A fixing nut 27 and a seal collar 28 are attached to the shaft 22 on the outer peripheral surface 22c. The seal collar 28 is located at the rear side with respect to the impeller 40 and within the plate through hole 12a. Further, the seal collar 28 engages the shaft 22 so that the backward movement thereof is prevented by the shaft 22.

The fixing nut 27 is positioned at the front side with respect to the impeller 40 and screwed together onto the shaft 22 in a left-handed-screw manner. The impeller 40 is fixed in the axial directions sandwiched by the fixing nut 27 and the seal collar 28 by being tightened with the fixing nut 27.

Also, within the motor chamber 18 and between the first and second bearings 23 and 24, a cylindrical rotor core 31 is provided on the outer peripheral surface 22c of the shaft 22 so that rotor core 31 rotates integrally with the shaft 22. Permanent magnets 32 are embedded within the rotor core 31 along the outer peripheral surface thereof.

Further, within the motor chamber 18, a cylindrical stator core 33 is provided so that the stator core 33 surrounds the periphery of the rotor core 31. The stator core 33 is fixed to the side wall 13a of the motor case 13. Further, a winding is wound in the stator core 33. The winding forms a coil 34 and protrudes at the opposite ends of the stator core 33.

If power is supplied to the winding, the coil 34 generates a rotating magnetic field. The permanent magnets 32 receive working of the rotating magnetic field and the rotor 31 is thereby driven to rotate together with the shaft 22 and the impeller 40.

The shaft 22, the rotor core 31, the permanent magnets 32, the stator core 33 and the coil 34 described above constitute the electric motor 30. Also, the shaft 22 serves as a rotational shaft which is common between the impeller 40 and the electric motor 30.

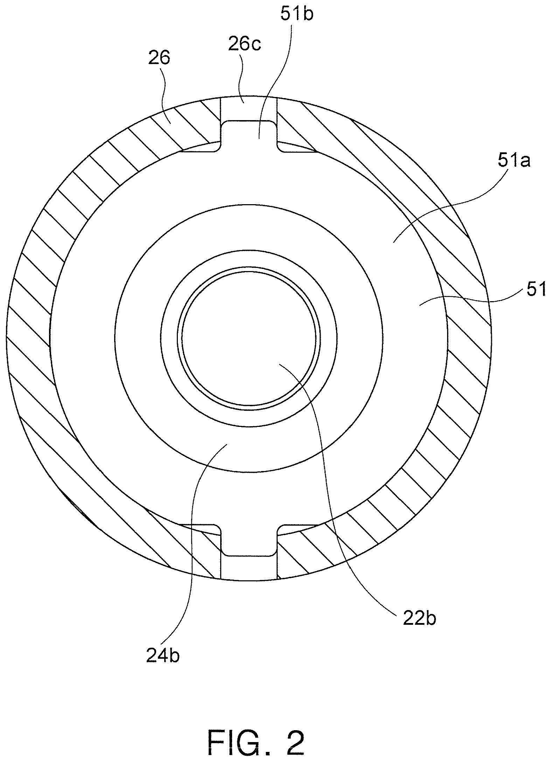

The second bearing 24 and the key ring 51 are inserted into and supported by the second bearing sleeve 2 6. Such construction of the bearing 24 and periphery thereof will be explained in more detail referring to Figs. 2-5.

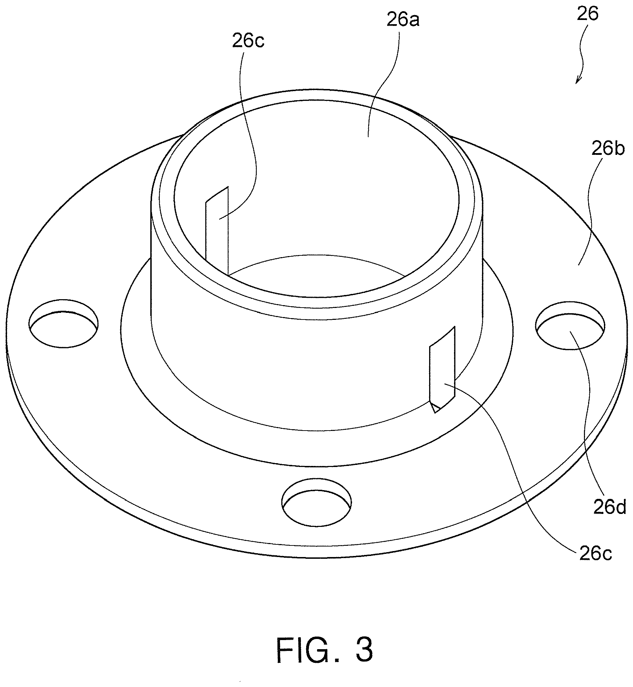

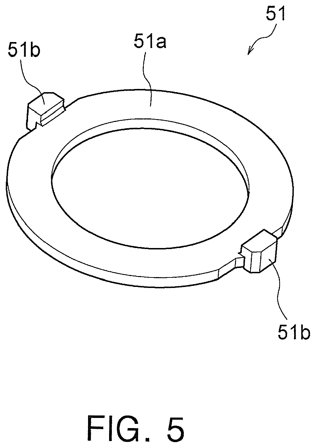

Fig. 2 is a partial cross-sectional view showing a positional relationship among the second bearing sleeve 26, the second bearing 24 (only the inner ring 24b is shown) and the key ring 51 of Fig. 1 in a cross section perpendicular to the axis and seen from the rear side. Shapes of the second bearing sleeve 26 and the key ring 51 will be explained later referring to Figs. 3 and 5. As shown in Fig. 2, positioning protrusions 51b of the key ring 51 are located to engage slits 26c of the second bearing sleeve 26.

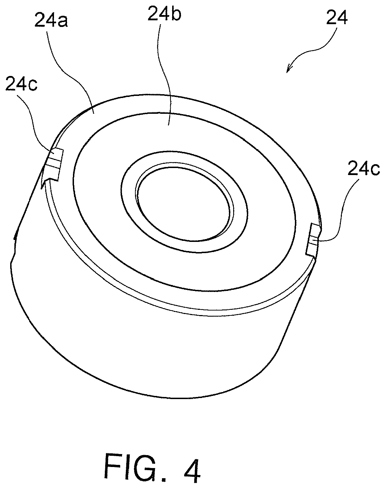

Fig. 3 is a perspective view of the second bearing sleeve 26. Fig. 4 is a perspective view of the second bearing 24. Fig. 5 is a perspective view of the key ring 51. As shown in Fig. 3, the second bearing sleeve 26 related to the present embodiment has a flanged cylindrical shape comprising a cylindrical portion 26a and a flange 26b. The flange 26b is fixed to the end plate 14, for example by screwing fastening members such as screws through screw holes 26d.

The inner peripheral surface of the cylindrical portion 26a fits the outer peripheral surface of the outer ring 24a of the second bearing 24. In other words, the outer ring 24a is constructed so that it can be inserted along with the inner peripheral surface of the second bearing sleeve 26 from the rear side.

In a state wherein the second bearing 24 and the second bearing sleeve 26 are fitted, a predetermined clearance is formed between the outer peripheral surface of the outer ring 24a and the inner peripheral surface of the cylindrical portion 26a. The clearance has, for example, a size of 2µmto 10µm in a radial direction. Because of this, if the second bearing 24 is not fixed, it is movable within the second bearing sleeve 26, in particular in the axial forward and backward directions.

Also, the cylindrical portion 26a is provided with key channels 26c as positioning structures. A key channel 26c is for example an opening provided through the inner and outer peripheral surfaces of the cylindrical portion 26a and shaped in a generally rectangular shape extending in an axial direction of the cylindrical portion 26a. The key channel 26c extends until the axial rear end of the second bearing sleeve 26. Also, the key channels 26c are, for example, provided at two locations with an interval of 180 degrees in a circumferential direction of the cylindrical portion 26a.

As shown in Fig. 4, the outer ring 24a is provided with notch portions 24c in the second bearing 24 related to the present embodiment. The notch portions 24c are provided at the axial rear end of the outer ring 24a. Also, the notch portions 24c can be located at positions aligned with the key channels 26c in a state wherein the second bearing 24 and the second bearing sleeve 26 are fitted.

As shown in Fig. 5, the key ring 51 related to the present embodiment comprises a circular portion 51a and positioning protrusions 51b. The positioning protrusions 51b are provided at positions aligned with the notch portions 24c of the second bearing 24 and the key channels 26c of the second bearing sleeve 26. For example, in Fig. 1, the notch portions 24c of the second bearing 24, the key channels 26c of the second bearing sleeve 26 and the positioning protrusions 51b of the key ring 51 are all located at circumferential positions appearing in the cross section.

The outer peripheral surface of the circular portion 51a is formed to fit the inner peripheral surface of the cylindrical portion 26a of the second bearing sleeve 26. The circular portion 51a supports the positioning protrusions 51b and, if there are a plurality of the positioning protrusions 51b (e.g. the example of Fig. 5), fixes their relative positional relationship.

According to such a construction, the key ring 51 can be inserted into the second bearing sleeve 26 from the rear side if the key channels 26c of the second bearing sleeve 26 and the positioning protrusions 51b of the key ring 51 are at circumferential positions aligned with respect to each other. On the other hand, the key ring 51 cannot be inserted if they are at circumferential positions not aligned with respect to each other because the positioning protrusions 51b would then collide with the cylindrical portion 26a or the flange 2 6b of the second bearing 26. Also, because of this, rotation (or a circumferential movement) of the key ring 51 with respect to the second bearing sleeve 26 is suppressed in a state wherein the key ring 51 is inserted into the second bearing sleeve 26.

Also, the notch portions 24c of the second bearing 24 and the positioning protrusions 51b of the key ring 51 are constructed to be engageable, so rotation (or a circumferential movement) of the outer ring 24a with respect to the key ring 51 is suppressed in a state wherein the notch portions 24c and the positioning protrusions 51b are engaged.

As is clear from the above, in a state wherein the second bearing sleeve 26 and the second bearing 24 are fitted and wherein the notch portions 24c and the key channels 51b are at aligned positions as shown in Fig. 1, the key ring 51 can be inserted from the axial end in the forward direction Also, if the key ring 51 is inserted in such a state, the positioning protrusions 51b, the notch portions 24c and the key channels 26c engage so that rotation is suppressed with respect to each other. In other words, creeping of the outer ring 24a with respect to the second bearing sleeve 26 is suppressed. Thus, the key ring 51 suppresses a circumferential movement of the outer ring 24a with respect to the second bearing sleeve 26. In other words, the key ring 51 functions as a positioning member for positioning the outer ring 24a with respect to the second bearing sleeve 26.

Further, a preloading spring 52 is located at the rear side of the key ring 51. The preloading spring 52 functions as an energizing member for energizing the key ring 51 toward the second bearing 24 or the second bearing sleeve 26. The preloading spring 52 is, for example, a coil spring or a member comprising a coil spring. In the example of Fig. 1, the key ring 51 is energized toward the second bearing 24 (inparticular the outer ring 24a), so engagement between the positioning protrusions 51b and the notch portions 24c is maintained. Also, the key ring 51 is energized so that the positioning protrusions 51b come into contact with the front ends of the key channels 2 6c of the second bearing sleeve 26 (i.e. energized toward the second bearing sleeve 26), so engagement between the positioning protrusions 51b and the key channels 26c is maintained.

A washer 53 is located in a rearward direction of the preloading spring 52 at the rear end of the second bearing sleeve 26. Further, a spring holding member 54 is located in a rearward direction of the washer 53. The spring holding member 54 is fixed to the end plate 14 by fastening members such as screws not shown. It can be said that the spring holding member 54 preloads the outer ring 24a in a forward direction via the washer 53, the preloading spring 52 and the key ring 51.

Note that, as explained above, the second bearing 24 is movable in the axial forward and backward directions within the second bearing sleeve 26 because the clearance is formed between the inner peripheral surface of the cylindrical portion 26a of the second bearing sleeve 26 and the outer peripheral surface of the outer ring 24a of the second bearing 24. Accordingly, the axial position of the second bearing 24 will be such that an axial backward force on the inner ring 24b received from the shaft 22 and an axial forward force on the outer ring 24a received from the key ring 51 balance. Thus, it can be said that the second bearing sleeve 26, the key ring 51 and the preloading spring 52 constitute a bearing holding structure or a damper sleeve construction.

Next, a method for assembling the electric supercharger 101 related to the first embodiment of the present invention will be explained, in particular regarding the area around end 22b of the shaft 22.

First, a shaft assembly comprising the shaft 22, the rotor core 31, etc., is assembled. Then, the shaft assembly is assembled to the motor case 13. At this point, the stator core 33 and the coil 34 have been fixed to the motor case 13. Then, the second bearing 24 is inserted into the shaft assembly from the rear side (alternatively, the second bearing 24 may have been included in the shaft assembly).

Then, the second bearing sleeve 26 is inserted from the rear side, and then the end plate 14 is attached. Then, the key ring 51 is inserted from the rear side in a state wherein the slits 26c of the second bearing sleeve 26 and the notch portions 24c of the outer ring 24a of the second bearing 24 are aligned. Then, the preloading spring 52 and the washer 53 is inserted in this order from the rear side, and further the spring holding member 54 is attached and fixed to the end plate 14.

Next, operation of the electric supercharger 101 related to the first embodiment of the present invention will be explained below.

Referring to Fig. 1, if power is supplied by a power source (not shown) to the coil 34 of the electric motor 30 in the electric supercharger 101, the rotor core 31 is driven to rotate by a rotating magnetic field generated by the coil 34, thereby driving the shaft 22 and the impeller 40 to rotate at a high speed around a central axis CA. Upon this, wing bodies 44 of the impeller 40 compress, i.e. supercharge, air sucked from the intake path 16 and pumps it to the discharging path 17.

Thus, the electric supercharger 101 relatedtothe first embodiment of the present invention comprises the bearing holding structure including the second bearing sleeve 26, the key ring 51 and the preloading spring 52. Also, the key ring 51 is a separate member different from the second bearing sleeve 26 and the preloading spring 52 in the bearing holding structure. Accordingly, assemblability of the bearing holding structure is improved.

Also, performance of the bearing is enhanced because the preloading spring 52 is constructed by using a coil spring.

Conventional art (for example that in Patent Document 1) use plate springs for preloading, in which case performance of the bearings would be reduced because the preload varies greatly in response to the compression distance for the plate spring. In particular, in uses such as in electric superchargers wherein they are driven in high speed rotation and the axial thrust load varies greatly, a preload cannot be stably imparted to the bearing, which causes reduction in performance (including reduced durability).

According to the electric supercharger 101 relatedtothe first embodiment of the present invention, the performance of the bearing can be enhanced by solving these problems. For example, the preload is stably imparted by the coil spring even if the compression distance varies due to part precision or assembly work or even if the preload or the position vary under high speed rotation.

Also, the outer ring 24a of the second bearing 24 and the second bearing sleeve 26 are formed by using materials having an equivalent coefficient of thermal expansion, so variation of the clearance due to thermal expansion can be suppressed. As a result, relative inclination within the second bearing 24 between the outer ring 24a and the inner ring 24b can be suppressed.

Also, the creeping of the outer 24a within the second bearing sleeve 26 can be suppressed by the key ring 51.

Also, preload is stably imparted to the outer ring 24a of the second bearing 24 by the preloading spring 52. In particular, the clearance is provided between the outer ring 24a and the second bearing sleeve 26, so insufficient sliding movement of the outer ring 24a can be prevented.

The following modifications can be made to the above first embodiment.

Although the outer rings of the bearings are fixed rings in the first embodiment, the inner rings may be the fixed rings. In other words, the first bearing sleeve 25 and the second bearing sleeve 26 may support the outer ring 23a and the outer ring 24a respectively as fixed rings.

The number and location of the positioning protrusions 51b in the key ring 51 is not limited to those shown in Fig. 5, etc. Also, although they are provided with an identical interval in a circumferential direction in the example of Fig. 5, the interval can be changed as needed.

The shape of the positioning protrusion 51b is not limited to those shown in Fig. 5, etc., but may be any shape provided that it is a positioning structure for suppressing or prohibiting rotation of the outer ring 24a with respect to the second bearing sleeve 26physically. Forexample, in the key ring, apositioningprotrusion engaging the outer ring 24a and a positioning protrusion engaging the second bearing sleeve 26 may be provided separately. Also, for example, the key ring may be provided with a positioning recess portion and the outer ring 24a and the second bearing sleeve 26 may be provided with respective protruding portions engaging the positioning recess portion.

The key ring 51 does not have to comprise the positioning protrusions 51b if the key ring 51 functions to position the outer ring 24a with respect to the second bearing sleeve 26. For example, the second bearing sleeve 26 may be provided with protruding portions protruding in an axial rearward direction instead of the slits 26c and the outer ring 24a may be provided with protruding portions protruding in an axial rearward direction instead of the notch portions 24c. Specific shapes of the protruding portions may for example be in the shape of a pin or the like, although those skilled in the art can design them as needed. In this case, the key ring 51 may be provided with recess portions or notch portions engaging the protruding portions of the second bearing sleeve 26 and the protruding portions of the outer ring 24a respectively instead of the positioning protrusions 51b.

### Second Embodiment

In a second embodiment, the shape of the key ring 51 in the first embodiment is modified.

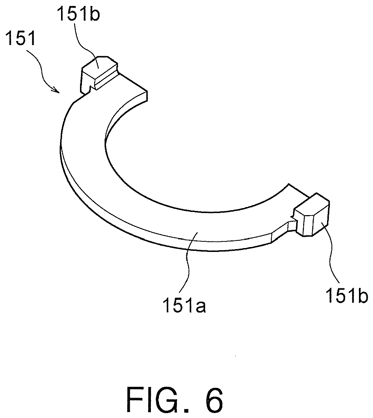

Fig. 6 shows an exemplary construction of the key member 151 related to the second embodiment. The key member 151 comprises an arc portion 151a and positioning protrusions 151b. The positioning protrusions 151b may for example be provided at the same positions as the positioning protrusions 51b of the key ring 51 related to the first embodiment.

Also in the second embodiment, the key member 151 is a separate member different from the second bearing sleeve 26 or the preloading spring 52, so assemblability of the bearing holding structure is improved in a manner similar to the first embodiment.

Also in the second embodiment, modifications similar to those for the first embodiment may be made. For example, the number or locations of the positioning protrusions 151b may be changed, wherein the shape of the arc portion 151a may be changed as needed.

Also, the shape of the arc portion 151a can be changed in any manner if it can fix and support the positioning protrusions 151b. It does not have to be in an arc shape.

Also, the key member 151 does not have to comprise the arc portion 151a. For example, two positioning members having a shape similar to the positioning protrusion 151b may be provided separately.

The above embodiments are merely exemplary and can be modified within the scope of the present invention defined by the appended claims.

## Claims

1. An electric supercharger comprising:
- a rotating electric machine having a rotating shaft;
- a bearing for supporting the rotating shaft rotatably, said bearing comprising an outer ring and an inner ring rotatable with respect to each other;
- a fixed ring support member for supporting the outer ring or the inner ring as a fixed ring;
- a positioning member for positioning the fixed ring with respect to the fixed ring support member; and
- an energizing member for energizing the positioning member toward the fixed ring or the fixed ring support member.

2. The electric supercharger as claimed in Claim 1, wherein:
- the bearing is an angular bearing;
- the fixed ring is the outer ring; and
- the positioning member suppresses circumferential movement of the fixed ring with respect to the fixed ring support member.

3. The electric supercharger as claimed in Claim 1, wherein:
- the fixed ring is the outer ring;
- the shaft extends on a first side of an axial direction with respect to the bearing;
- the positioning member is attached on a second side of the axial direction opposite to the first side with respect to the bearing; and
- the fixed ring support member has an inner peripheral surface and is constructed so that the fixed ring can be inserted from the second side along with the inner peripheral surface.

4. The electric supercharger as claimed in Claim 1, wherein the energizing member is a coil spring.
